# EUROPEAN PATENT SPECIFICATION

(11) **EP 0 717 226 B1**
(45) Date of publication and mention of the grant of the patent: **05.09.2001**
(21) Application number: 95119498.4
(22) Date of filing: 11.12.1995
(51) Int. Cl.: F16L 33/26

(54) **Coupling for flexible metal tubes**
Kupplung für flexible Metallrohre
Raccord de tuyaux flexibles en métal

(30) Priority: 14.12.1994 IT TO941018
(43) Date of publication of application: 19.06.1996
(73) Proprietor: Castelli, Sergio, 10100 Torino (IT)
(72) Inventor: Castelli, Sergio, 10100 Torino (IT)
(74) Representative: Modiano, Guido, Dr.-Ing.

(56) References cited:
- EP-A- 0 545 410
- DE-C- 886 686
- DE-U- 9 404 268
- FR-A- 700 960
- US-A- 5 080 405

## Description

The present invention relates to a hermetic coupling device particularly for the jointing, by means of threaded tightening elements, of flexible metallic tubes with parallel corrugations and of nipple end fittings provided with protruding circular ribs to cocks and end adaptors in general.

More specifically, the invention relates to a coupling device that comprises the following cooperating elements:
-- a male or female adaptor to be connected to a generic threaded end fitting, for example a cock, and adapted to hermetically accommodate the end of the corrugated tube or the nipple;
-- a female or, respectively, male threaded annular tightening element adapted to cooperate with a corresponding threaded portion of the adaptor to anchor the end of the corrugated tube or the nipple to said adaptor;
-- a hermetic sealing element interposed between the adaptor, or both the annular element and the adaptor, and the tube or nipple.

Conventional coupling devices of the specified type are substantially divided into two categories: those of the so-called "cable clamp" type, wherein both mechanical anchoring and sealing are provided by radial action on the end of the tube or nipple to be connected, and those with a front seal, wherein the mechanical anchoring is of the axial type. In devices of the first type, the retention and hermetic sealing element, constituted by a ring of typically elastomeric or polymeric flexible material interposed between respective abutments of the annular element and of the adaptor, is deformed radially by the locking of said annular element to clamp the end of the corrugated tube or the nipple, thus providing their axial anchoring with respect to the adaptor as well as the hermetic tightness of the coupling.

The greatest drawback of this type of conventional coupling devices is the unreliability of the mechanical retention against extraction of the tube or nipple, which is mainly due to aging of the material of the hermetic sealing element (which occurs particularly rapidly in a corrosive environment). Furthermore, said devices, having no positive elements for mutual abutment between the annular element and the adaptor, do not give the person who assembles them the perception of when the tightening limit is reached, to the obvious detriment of correct installation of the device.

In devices with a front hermetic seal, the axial anchoring element, which is separate from the hermetic sealing element, is typically constituted by two half-rings, which are accommodated in a groove of the corrugated tube and protrude radially with respect thereto to be engaged by an abutment of the annular element and transmit to the tube the axial tightening thrust produced by said annular element. Hermetic sealing is entrusted to a flexible front gasket that rests on the adaptor and receives, in forced contact engagement, the end of the tube.

This second type of conventional coupling device, too, has several drawbacks, and substantially a considerably troublesome installation, caused by the difficulty in keeping the half-rings in place during the assembly of the device, and the need to have half-rings that are perfectly machined and calibrated according to the geometric features of the corrugated tube; but above all, the greatest drawback is constituted by the substantial lack of adaptability of these devices to nipple end fittings, which have no grooves capable of receiving and accommodating said half-rings.

DE-C-886 686 discloses a device for coupling flexible tubes to rigid tubes which includes a sleeve which is disposed at the end of the flexible tube and which surrounds a rubber ring, which is pressed against the end of the rigid tube, by means of an elastic ring which is arranged completely in a groove of the end of the rigid tube. US-A-5 080 405 discloses a corrugated pipe coupling which employs a cut metal seal ring also arranged completely in a groove of on of the tubes to be connected.

A principal aim of the present invention is substantially to eliminate the drawbacks of the above mentioned conventional coupling devices, and within the scope of this general aim, the present invention has the following important particular objects:
-- to provide a device capable of ensuring maximum reliability and durability, in terms both of hermetic sealing and of mechanical anchoring of tubes or, equally, of nipple end fittings;
-- to provide a device that is structurally simplified and easy to apply and manufacture and is therefore economically advantageous;
-- to provide a device wherein one or more components have a standardized structure and therefore are also commercially available, to the further advantage of economy and practicality in the application of said device;
-- to provide a coupling device that is completely free from degradation of the mechanical anchoring of the tube or nipple to be connected and is therefore particularly adapted for the connection of household heating appliances to the fuel gas distribution system, and for the connection of flexible metallic tubes for transporting fluids at medium pressure.

According to the present invention, this aim as well as these and other important objects are achieved with a coupling device having the specific features of claim 1.

Substantially, the invention is based on the use of an axial anchoring element interposed between the annular element of the device and the tube or nipple to be connected; said anchoring element is constituted by a metallic ring that is allowed to flex radially by a longitudinal cut and acts as an axial retainer by partially engaging, in its minimum-diameter configuration, a groove of the tube or a protruding rib of the nipple to be connected.

The cross-section of the ring, which is quadrangular, circular, or has another profile, is therefore significantly small and allows to provide a highly flexible ring that can be easily fitted, as will become apparent hereinafter, on the corrugation of the tube or on the conical tip of the nipple without permanent deformations and requires a limited flexing force.

Said ring cooperates with an abutment of the tightening ring and transmits the axial thrust of the annular element to the tube or nipple, thus forcing the end of the tube or nipple into contact engagement with a sealing gasket that abuts against the adaptor, when the annular element is screwed on said adaptor.

According to an embodiment of the invention, the anchoring ring is separated from the annular tightening element and is fitted independently on the tube or nipple, whereon the annular tightening element has been fitted beforehand.

According to a constructive different embodiment, which is particularly advantageous in terms of easy assembly and reduction of loose components, the anchoring ring is included in a groove of the annular tightening element, which is thus provided to the user complete with said ring and is fitted, together with said ring, on the tube or nipple to be connected.

Further characteristics and advantages of the device according to the invention will become apparent from the following detailed description and with reference to the accompanying drawings, given only by way of non-limitative example, wherein:
figure 1 is an axial sectional view of the coupling device applied to a flexible metal tube with parallel corrugations;
figure 2 is a perspective detail view of the anchoring ring;
figure 3 is a sectional view, similar to figure 1, of a different embodiment of the invention;
figure 3a is a partial sectional view of the anchoring ring, according to a further embodiment;
figure 4 is a sectional view, similar to figure 1, of the coupling device applied to a nipple end fitting;
figure 5 is a sectional view, similar to figure 1, of a further embodiment of the invention;
figure 6 is a sectional view, similar to figure 4, of another embodiment of the invention.

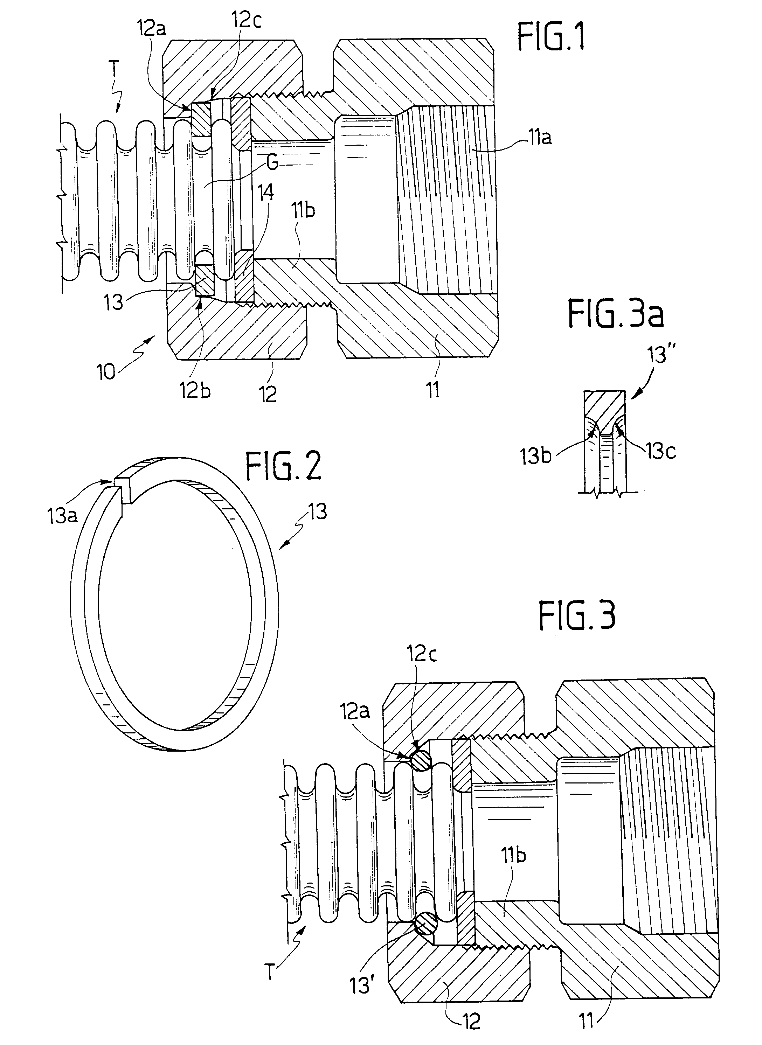

In figure 1, the coupling device 10 comprises a male adaptor 11, of a standardized type, with a threaded seat 11a meant to couple with a generic end fitting (not shown), for example to the threaded end of a dispenser cock or faucet, and a threaded tang 11b adapted to receive a correspondingly threaded annular tightening element 12. The annular element 12 is fitted, so as to be freely slideable axially, on the end of a flexible metal tube T of the type with parallel corrugations, which by means of the device 10 must be hermetically connected to said faucet or other generic threaded end fitting.

For this purpose, an axial mechanical anchoring element is interposed between the ring 12 and the tube T and is constituted by a metallic ring 13, which is allowed to be flexible in a radial direction by a longitudinal cut 13a (figure 2). The ring 13 provides axial retention by partially engaging, when it is deformed in its minimum-diameter configuration, a groove G of the tube T. The ring 13, which has a quadrangular cross-section in the example of figure 1, in fact only partially penetrates in the groove G, engaging between two adjacent corrugations of the tube T by an extent that is limited but sufficient to transmit to said tube an axial stress that is uniformly distributed along its entire circumference. On one hand, this requires no special machining of the ring, and on the other hand, it allows to maintain the cross-section of said ring within narrow limits, so as to give it high radial elasticity.

Accordingly, the ring 13 can be easily fitted to the tube T, requiring a limited force to be deformed elastically in order to increase its inside diameter to make it pass over the corrugation of the tube T.

An abutment 12a is formed on the annular element 12 and is adapted to engage the ring 13 to force the tube against the adaptor 11 when said annular element is screwed and tightened on the tang 11b of said adaptor.

The abutment 12a is located on the bottom of a cylindrical retention seat 12b delimited by a corresponding cylindrical wall; when the device is assembled, said wall prevents the ring 13 from widening and prevents the consequent accidental disengagement of said ring from the groove G. A frustum-shaped adaptor 12c, arranged along the continuation of the cylindrical wall of the seat 12b, facilitates, during assembly, the entry of the ring in the cylindrical retention seat and its engagement in the groove G of the tube T.

An annular gasket 14 abuts against the front wall of the tang 11b, and the end of the tube T is forced hermetically against it by the tightening action of the annular element 12. The gasket 14 can be made of flexible material, or of soft metal, and can also be of a composite metallic-elastomeric type which is the subject of a parent Industrial Utility Model in the name of the same Applicant.

The embodiment of figure 3, wherein similar or corresponding parts are designated by the same reference numeral, differs from what has been described above in that the ring 13' has a circular cross-section, in order to avoid possible incisions of the tube T caused by concentration of stresses on the edges of the quadrangular ring. In this case, too, an abutment 12a is provided on the annular element 12 to push the ring axially, as well as a frustum-shaped adaptor 12c that directly couples to the abutment 12a and simultaneously prevents the widening of the ring and transmits the tightening force thereto for its forced and partial engagement in the groove G of the tube.

The embodiment of figure 3a shows a ring 13" having instead a substantially Y-shaped cross-section. Said ring is characterized by curved front chamfers 13b,13c capable of coupling to two adjacent corrugations of the tube T to uniformly distribute both the axial thrust and the radial tightening force; the ring 13" is particularly adapted for use in devices 10 for jointing tubes for fluids at medium-high pressure and therefore with a high tightening torque.

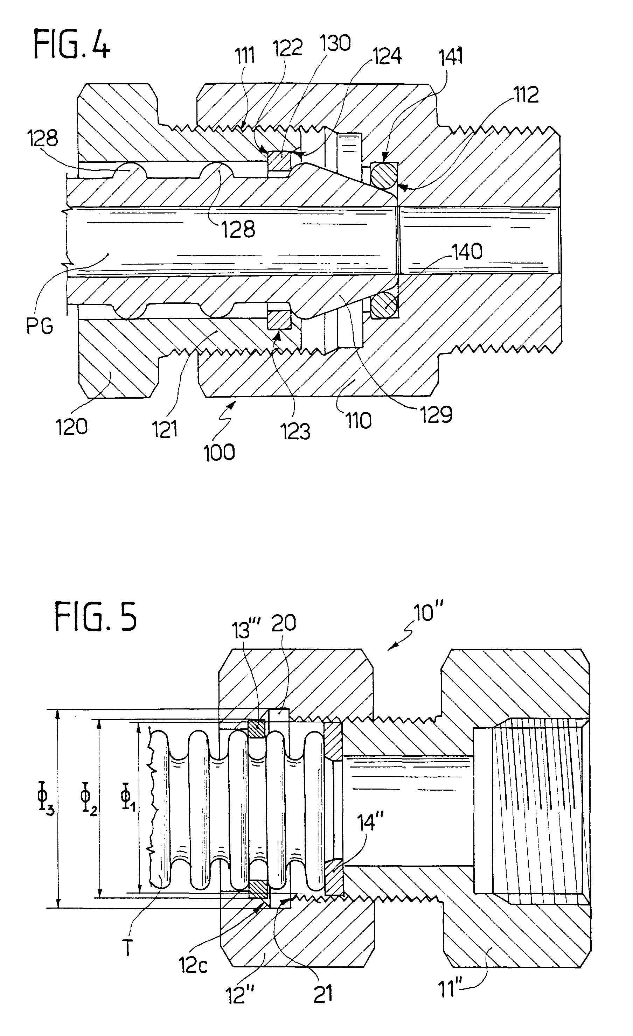

The embodiment of figure 4 relates to a device 100 for the coupling of a nipple PG to a generic threaded end fitting, which is not shown.

According to this embodiment, the adaptor 110 is of the female type and receives, in a threaded seat 111, the correspondingly threaded hollow tang 121 of the tightening ring 120. The cavity of the tang accommodates the nipple PG so that it can slide axially; said nipple is provided, in a per se known manner, with protruding circular ribs 128 and with a conical tip 129.

The ring 130 is fitted on the nipple PG after the elastic deformation required to allow said ring to pass beyond the conical tip 129. In its minimum-diameter configuration, the ring 130 instead partially engages the protruding raised portion of the conical tip 129 and transmits to the nipple the axial tightening thrust received from the annular element 120. For this purpose, in a manner that is fully similar to the one described with reference to figure 1, the end of the tang 121 of the annular element is provided with an abutment 122 surrounded by a cylindrical seat 123 for containing the ring; said seat is connected to a frustum-shaped flared portion 124 adapted to facilitate the entry of the ring 130 in the cylindrical seat 123. The conical tip 129 of the nipple PG is forced, by the tightening of the annular element 120, into forced contact engagement against a corresponding abutment 112 of the adaptor 110 and engages, to provide a hermetic seal, a gasket 140 of the O-Ring type that is contained in a groove 141 of said adaptor.

In the above described embodiments, the ring 13, 13', or 13" and 130 is separated from the respective annular tightening element 12,120. Accordingly, the devices 10,100 are assembled by first fitting the ring 12,120 on the tube T or respectively on the nipple PG and then fitting the ring 13,130, after deforming it elastically. Then the annular element is tightened on the adaptor 11,110, and this tightening action, in addition to tightening the ring, by making it assume its minimum-diameter configuration, forces the tube T, or respectively the nipple PG, into contact engagement with the adaptor 11,110, achieving the axial mechanical engagement of the connection and sealing it hermetically.

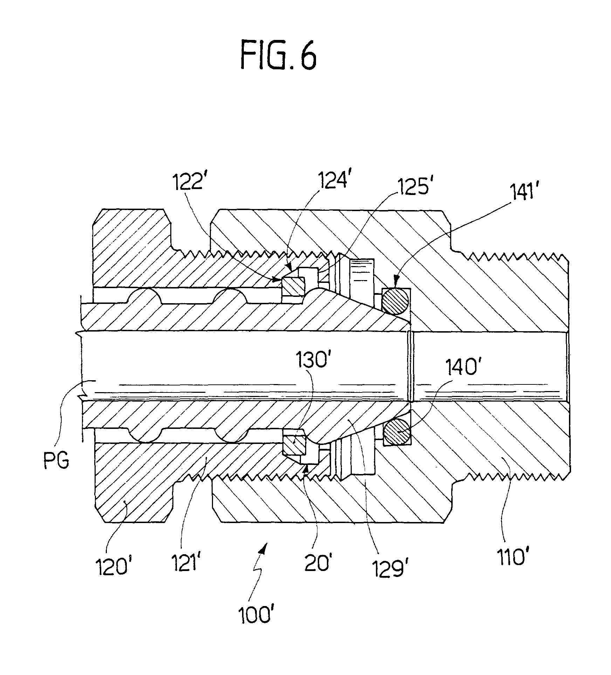

In the different embodiments of figures 5 and 6, which are particularly advantageous in terms of easy assembly and reduction in loose components, the anchoring ring is built into the annular tightening element, which is thus provided to the user complete with said ring. For this purpose, the annular element 12" of the device 10" of figure 5 is provided with a groove 20 which is connected at one end to the frustum-shaped adaptor 12c described above and is delimited, at the other end, by an abutment 21 the inside diameter Φ1 whereof is slightly smaller than the outside diameter Φ2 of the ring 13'" in its minimum-diameter configuration.

In these conditions, the ring 13"', which is initially forced inside the groove 20, is subsequently unable to leave it. On the other hand, the depth of the groove 20, that is to say, the maximum diameter Φ3 of said groove, is chosen so that it is slightly greater than the diameter that the ring 13" reaches, by deforming elastically, to move over and beyond the corrugations of the tube T when the annular element 12" is fitted on said tube, and in this manner the groove 20 does not interfere with the ring, allowing its correct expansion.

Likewise, and for the specified purpose, a groove 20' is formed in the tang 121' of the annular element 120' of the device 100' of figure 6; said groove is connected to the abutment 122' for the ring 130' by a frustum-shaped flared portion 124' and is delimited by a front collar 125' for the stable retention of the ring. The depth of the groove 20', that is to say, its maximum diameter Φ3, is also chosen with the criterion of allowing the free expansion of the ring 130' to move beyond the conical tip 120' of the nipple PG'.

Of course, without altering the concept of the invention, the details of execution and the embodiments may be altered extensively, with respect to what has been described and illustrated by way of non-limitative example, without thereby abandoning the scope of the invention as defined by the appended claims, wherein the reference numerals are given only for the sake of better comprehension.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Hermetic coupling device and flexible metal tube or nipple end fitting both with parallel corrugations, particularly for the jointing of said flexible metal tubes (T) or nipple end fittings (PG) to cocks and the like, comprising: an adaptor (11, 110) for connection to the cock or the like, said adaptor being adapted to hermetically receive the end of the tube (T) or nipple (PG); a threaded annular element (12,120) that is adapted to cooperate with a corresponding threaded portion (11b,111) of the adaptor to anchor said tube or nipple thereto; a sealing element (14,140) and an axial anchoring element, which are interposed between the annular element (12,120) and the tube or nipple; said axial anchoring element (13,13',13",13'"; 130,130') being constituted by a metallic ring that is allowed to flex radially by a longitudinal cut (13a) and contrasts against an abutment (12a,122) of the annular element (12,120), **characterized in that** said metallic ring performs the axial retention of the tube (T) or of the nipple (PG) by partial engagement, in its minimum-diameter configuration, of a groove (G) or respectively of the tip rib (129) of said tube or nipple such that the inside of said metallic ring is radially spaced from the bottom of the groove in its minimum-diameter configuration, said ring being partially accommodated in a cylindrical seat (12b,123) of the annular element (12,120).

2. Coupling device according to claim 1, **characterized in that** the cylindrical wall of said seat (12b,123) prevents, when the device is assembled, the widening of the ring and its consequent disengagement from the groove (G) of the tube (T) or from the rib (129) of the nipple (PG).

3. Coupling device according to claims 1 and 2, **characterized in that** the cylindrical wall that delimits the cylindrical seat (12b,123) for the retention of the ring (13,130) in the annular tightening element (12,120) continues with a frustum-shaped connecting portion (12c,124) adapted to facilitate, during assembly, the entry of the ring (13,130) in the cylindrical retention seat (12b,123) and its engagement in the groove (G) of the tube (T) or with the tip rib (129) of the nipple (PG).

4. Coupling device according to claim 1, **characterized in that** it comprises a male adaptor (11) whereon an annular gasket (14) constituting said sealing element abuts, the end of the corrugated tube (T) being forced against said gasket, to provide a hermetic seal, by the tightening action of the annular element (12) on said adaptor (11).

5. Coupling device according to claim 4, **characterized in that** the gasket (14) is constituted by one of the following materials: elastomeric material, reinforced polymeric material, soft metal, composite metal-elastomeric material.

6. Coupling device according to claim 1, **characterized in that** it comprises a female adaptor (110) which accommodates, in a threaded seat (111), the correspondingly threaded hollow tang (121) of the annular tightening element (120); in that the tang of the annular element accommodates, so that it can slide axially, the nipple (PG) whereon the axial retention ring (130) is fitted; and in that the conical tip of the nipple (PG) is forced, by the tightening of the annular element (120), against a corresponding abutment (112) of the adaptor (110) and engages, to provide a hermetic seal, a gasket (140) of the O-Ring type, constituting said sealing element, that is contained in a groove (141) of said adaptor.

7. Coupling device according to claim 1 and any one of claims 2 to 6, **characterized in that** the axial anchoring ring (13,13" ; 130,130') has a quadrangular cross-section.

8. Coupling device according to claim 1 and any one of claims 2 to 6, **characterized in that** the axial anchoring ring (13') has a circular cross-section.

9. Coupling device according to claim 1 and any one of claims 2 to 6, **characterized in that** the axial anchoring ring (13") has a substantially Y-shaped cross-section, with curved front chamfers (13b,13c).

10. Coupling device according to claims 1 to 9, **characterized in that** the axial anchoring ring (13,13'; 130) is separate from the annular element (12,120,12",120"); said ring, during assembly, being fitted independently on the tube (T) or nipple (PG) whereon the annular element is fitted beforehand.

11. Coupling device according to claims 1 to 9, **characterized in that** the axial anchoring ring (13"',130') is included in a groove (20,20") of the annular element (12",120') in a preassembled relationship; the annular element being supplied to the user complete with said ring and being fitted therewith on said tube (T) or nipple (PG).

12. Coupling device according to claim 11, **characterized in that** the minimum diameter (Φ1) of the groove (20,20') is smaller than the minimum diameter (Φ2) of the anchoring ring (13"',130') in order to retain said ring, and in that the maximum diameter (Φ3) of the groove is chosen so that its size allows the elastic expansion that the anchoring ring undergoes to move over and beyond the corrugations of the tube (T) or, respectively, the protruding ribs of the nipple (PG).

## Patentansprüche

1. Hermetische Kupplungsvorrichtung und flexibles Metallrohr oder Nippel-Endfitting, insbesondere zum Verbinden der flexiblen Metallrohre (T) oder Nippel-Endfittings (PG) mit einem Hahn oder dergleichen, mit:
- einem Adapter (11, 110) zur Verbindung mit dem Hahn oder dergleichen, wobei der Adapter ausgebildet ist, das Ende des Rohres (T) oder des Nippels (PG) hermetisch aufzunehmen;
- einem mit einem Gewinde versehenen, ringförmigen Element (12, 120), das ausgebildet ist, um mit einem korrespondierenden, mit einem Gewinde versehenen Bereich (11b, 111) des Adapters wechselzuwirken, um das Rohr oder den Nippel daran zu verankern;
- einem Dichtelement (14, 140) und einem axialen Verankerungselement, die zwischen dem ringförmigen Element (12, 120) und dem Rohr oder Nippel eingefügt sind;
- das axiale Verankerungselement (13, 13', 13", 13'", 130, 130') ist durch einen metallischen Ring gebildet, der aufgrund eines längsgerichteten Schnittes (13a) radial biegbar ist und einem Widerlager (12a, 122) des ringförmigen Elementes (12, 120) gegenübersteht, **dadurch gekennzeichnet, dass** der metallische Ring die axiale Sicherung des Rohres (T) oder des Nippels (PG) durch teilweises Anliegen in seiner kleinsten Durchmesserkonfiguration an einer Aussparung (G) bzw. der Endrippe (129) des Rohres oder des Nippels dergestalt bewirkt, dass das Innere des metallischen Ringes radial von dem Boden der Aussparung in seiner kleinsten Durchmesserkonfiguration beabstandet ist, und der Ring teilweise in einem zylindrischen Sitz (12b, 123) des ringförmigen Elementes (12, 120) untergebracht ist.

2. Kupplungsvorrichtung nach Anspruch 1, **dadurch gekennzeichnet, dass** die zylindrische Wandung des Sitzes (12b, 123) im montierten Zustand das Aufweiten des Ringes und sein daraus folgendes Nichtanliegen an die Aussparung (G) des Rohres (T) oder an der Rippe (129) des Nippels (PG) verhindert.

3. Kupplungsvorrichtung nach Anspruch 1 oder 2, **dadurch gekennzeichnet, dass** die zylindrische Wandung, die den zylindrischen Sitz (12b, 123) zur Sicherung des Ringes (13, 130) in dem ringförmigen Spannelement (12, 120) abgrenzt, sich in einem kegelstumpfförmigen Verbindungsbereich (12c, 124) fortsetzt, der ausgebildet ist, um während der Montage die Einführung des Ringes (13, 130) in den zylindrischen Sicherungssitz (12b, 123) und sein Anliegen an die Aussparung (G) des Rohres (T) oder an die Endrippe (129) des Nippels (PG) zu erleichtern.

4. Kupplungsvorrichtung nach Anspruch 1, **dadurch gekennzeichnet, dass** ein Adapterstutzen (11) vorhanden ist, auf dem eine ringförmige Dichtung (14) das Dichtelement ausbildend anliegt und dass das Ende des mit einem Gewinde versehenen Rohres (T) an die Dichtung durch die Spannwirkung des ringförmigen Elementes (12) auf den Adapter (11) angedrückt ist, um eine hermetische Dichtung zu bewirken.

5. Kupplungsvorrichtung nach Anspruch 4, **dadurch gekennzeichnet, dass** die Dichtung durch eines der folgenden Materialien ausgebildet ist: elastisches Polymer, verstärkte Polymerwerkstoffe, Weichmetall, Verbundwerkstoffe aus Metall und Elastomeren.

6. , Kupplungsvorrichtung nach Anspruch 1, **dadurch gekennzeichnet, dass** sie eine Adaptermuffe (110), die in einem mit einem Gewinde versehenen Sitz den korrespondierend mit einem Gewinde versehenen hohlen Schaft (121) des ringförmigen Spannelementes (120) aufnimmt, aufweist, dass der Schaft des ringförmigen Elementes den Nippel (PG), auf dem der axiale Sicherungsring (130) befestigt ist, dergestalt aufnimmt, dass er axial beweglich ist und dass das konische Ende des Nippels an ein korrespondierendes Widerlager (112) des Adapters (110) durch das Spannen des ringförmigen Elementes (120) angedrückt wird und an eine Dichtung (140) in der Art eines O-Ringes unter Ausbildung des Dichtelementes, das in einer Aussparung (141) des Adapters aufgenommen ist, anliegt, um eine hermetische Dichtung zu bewirken,

7. Kupplungsvorrichtung nach Anspruch 1 und einem der Ansprüche 2 bis 6, **dadurch gekennzeichnet, dass** der axiale Verankerungsring (13, 13"; 130, 130') einen viereckigen Querschnitt aufweist.

8. Kupplungsvorrichtung nach Anspruch 1 und einem der Ansprüche 2 bis 6, **dadurch gekennzeichnet, dass** der axiale Verankerungsring (13') einen kreisförmigen Querschnitt aufweist.

9. Kupplungsvorrichtung nach Anspruch 1 und einem der Ansprüche 2 bis 6, **dadurch gekennzeichnet, dass** der axiale Vorankerungsring (13") einen im wesentlichen Y-förmigen Querschnitt mit gekrümmten vorderen Auskehlungen aufweist.

10. Kupplungsvorrichtung nach den Ansprüchen 1 bis 9, **dadurch gekennzeichnet, dass** der axiale Verankerungsring (13, 13'; 130) von dem ringförmigen Element (12, 120, 12", 120") verschieden ist und der Ring während der Montage unabhängig auf dem Rohr (T) oder Nippel (PG) befestigt wird, an dem das ringförmige Element zuvor befestigt wurde.

11. Kupplungsvorrichtung nach den Ansprüchen 1 bis 9, **dadurch gekennzeichnet, dass** der axiale Verankerungsring (13'", 130') in einem vormontierten Zustand in eine Aussparung (20, 20") des ringförmigen Elementes (12", 120') enthalten ist und das ringförmige Element dem Verwender komplett mit dem Ring zugeführt und es damit auf dem Rohr (T) oder Nippel (PG) befestigt wird.

12. Kupplungsvorrichtung nach Anspruch 11, **dadurch gekennzeichnet, dass** der kleinste Durchmesser (Φ1) der Aussparung (20, 20') kleiner als der kleinste Durchmesser (Φ2) des Verankerungsringes (13'", 130') ist, um den Ring zurückzuhalten und dass der größte Durchmesser (Φ3) der Aussparung so gewählt ist, dass seine Abmessung die elastische Ausdehnung erlaubt, der der Verankerungsring ausgesetzt ist, um über und hinter die Riffelung des Rohres (T) oder bzw. die hervorstehenden Rippen des Nippels (PG) zu gelangen.

## Revendications

1. Dispositif de couplage hermétique et tubes métalliques flexibles ou raccords de tuyauterie d'extrémité, tous les deux avec des ondulations parallèles, particulièrement pour la jonction desdits tubes métalliques (T) ou des raccords d'extrémités de tuyauterie (PG) à des robinets et similaires, comprenant : un adaptateur (11, 110) pour la connexion aux robinets ou similaires, ledit adaptateur étant adapté pour recevoir de façon hermétique l'extrémité du tube (T) ou le raccord de tuyauterie (PG) ; un élément annulaire fileté (12, 120) qui est adapté pour coopérer avec une partie filetée correspondante (11b, 111) de l'adaptateur pour fixer ledit tube ou ledit raccord de tuyauterie à cet adaptateur ; un élément d'étanchéité (14,140) et un élément de fixation axial, qui sont interposés entre l'élément annulaire (12, 120) et le tube ou raccord de tuyauterie ; ledit élément de fixation axial (13, 13', 13", 13'"; 130, 130') étant constitué d'un anneau métallique qui peut fléchir radialement du fait d'une découpe longitudinale (13a) et qui s'insère au fond contre une butée (12a, 122) de l'élément annulaire (12, 120), **caractérisé en ce que** ledit anneau métallique réalise la retenue axiale du tube (T) ou du raccord de tuyauterie (PG) par une prise partielle, dans sa configuration de diamètre minimum, d'une rainure (G) ou respectivement de la nervure inclinée (129) dudit tube ou raccord de tuyauterie, de sorte que l'intérieur dudit anneau métallique soit espacé radialement du fond de la rainure dans sa configuration de diamètre minimum, ledit anneau étant partiellement logé dans un logement cylindrique (12b, 123) de l'élément annulaire (12, 120).

2. Le dispositif de couplage selon la revendication 1, **caractérisé en ce que** la paroi cylindrique dudit logement (12b, 123) empêche, lorsque le dispositif est assemblé, l'élargissement de l'anneau et son dégagement en résultant de la rainure (G) du tube (T) ou de la nervure (129) du raccord de tuyauterie (PG).

3. Dispositif de couplage selon les revendications 1 et 2, **caractérisé en ce que** la paroi cylindrique qui délimite le logement cylindrique (12b, 123) pour la retenue de l'anneau (13, 130) dans l'élément de maintien annulaire (12, 120) se poursuit avec une partie de connexion en forme de troncône (12c, 124) adaptée pour faciliter, durant l'assemblage, l'entrée de l'anneau (13, 130) dans le logement de retenue cylindrique (12b, 123) et son engagement dans la rainure (G) du tube (T) ou avec la nervure inclinée (129) du raccord de tuyauterie (PG).

4. Dispositif de couplage selon la revendication 1, **caractérisé en ce qu**'il comprend un adaptateur mâle (11) sur lequel un joint annulaire (14) constituant ledit élément d'étanchéité vient en butée, l'extrémité du tube ondulé (T) étant plaquée contre ledit joint, pour fournir une fermeture hermétique, par l'action de serrage de l'élément annulaire (12) sur ledit adaptateur (11).

5. Dispositif de couplage selon la revendication 4, **caractérisé en ce que** le joint (14) est constitué d'un des matériaux suivants : matériau élastomère, matériau polymère renforcé, métal souple, matériau composite-métal élastomère.

6. Dispositif de couplage selon la revendication 1, **caractérisé en ce qu**'il comprend un adaptateur femelle (110) qui loge, dans un logement fileté (111), le tenon creux fileté correspondant (121) de l'élément de serrage annulaire (120) ; et en ce que le tenon de l'élément annulaire loge, de sorte qu'il puisse glisser axialement, le raccord de tuyauterie (PG) sur lequel l'anneau de retenue axiale (130) est ajusté ; et en ce que l'inclinaison conique du raccord de tuyauterie (PG) est mise en force, par le serrage de l'élément annulaire (120), contre un butée correspondante (112) de l'adaptateur (110) et vient en contact, pour fournir une fermeture hermétique, un joint (140) du type joint torique, constituant ledit élément d'étanchéité, qui est placé dans une rainure (141) dudit adaptateur.

7. Dispositif de couplage selon la revendication 1 et l'une quelconque des revendications 2 à 6, **caractérisé en ce que** l'anneau de fixation axial (13, 13", 130, 130') présente une section transversale quadrangulaire.

8. Dispositif de couplage selon la revendication 1 et l'une quelconque des revendications 2 à 6, **caractérisé en ce que** l'anneau de fixation axial (13') présente une section transversale circulaire.

9. Dispositif de couplage selon la revendication 1 et l'une quelconque des revendications 2 à 6, **caractérisé en ce que** l'anneau de fixation axial (13") présente une section transversale en forme de Y, avec des chanfreins avant incurvés (13b, 13c).

10. Dispositif de couplage selon l'une des revendications 1 à 9, **caractérisé en ce que** l'anneau de fixation axial (13, 13', 130) est séparé de l'élément annulaire (12, 120, 12", 120"), ledit anneau, durant l'assemblage, étant ajusté indépendamment sur le tube (T) ou le raccord de tuyauterie (PG) sur lequel l'élément annulaire est ajusté auparavant.

11. Dispositif de couplage selon l'une des revendications 1 à 9, **caractérisé en ce que** l'anneau de fixation axial (13"', 130') est inclus dans une rainure (20, 20") de l'élément annulaire (12", 120') en relation de préassemblage ; l'élément annulaire étant fourni complet à l'utilisateur avec ledit anneau et étant muni dudit anneau sur ledit tube (T) ou ledit raccord de tuyauterie (PG).

12. Dispositif de couplage selon la revendication 11, **caractérisé en ce que** le diamètre minimum (Φ1) de la rainure (20, 20') est inférieur au diamètre minimum (Φ2) de l'anneau de fixation (13'", 130') de façon à retenir ledit anneau, et en ce que le diamètre maximal (Φ3) de la rainure est choisi de sorte que sa taille permette l'expansion élastique que subit l'anneau de fixation pour se déplacer au-dessus et en deçà des ondulations du tube (T) ou, respectivement, des nervures en saillie du raccord de tuyauterie (PG).
